# EUROPEAN PATENT SPECIFICATION

(11) **EP 3 857 587 B1**
(45) Date of publication and mention of the grant of the patent: **28.02.2024**
(21) Application number: 19778470.5
(22) Date of filing: 23.09.2019
(51) Int. Cl.: H01H 39/00, H01H 1/38, H01H 1/20, H01H 1/36

(54) **SWITCH WITH PYROTECHNIC ACTUATOR**
SCHALTER MIT PYROTECHNISCHEM AKTUATOR
COMMUTATEUR À ACTIONNEUR PYROTECHNIQUE

(30) Priority: 24.09.2018 IN 201811035924; 20.11.2018 GB 201818862
(43) Date of publication of application: 04.08.2021
(73) Proprietor: Eaton Intelligent Power Limited, Dublin 4 (IE)
(72) Inventor: MUJAWAR, Asad, Pune 411060 (IN); BURKETT, Roger, Swindon SN2 7AA (GB); SABALE, Varsha, Pune 411028 (IN)
(74) Representative: Seymour-Pierce, Alexandra Isobel
(86) International application number: PCT/EP2019/075512
(87) International publication number: WO 2020/064623

(56) References cited:
- US-A- 3 118 986
- US-A- 3 488 458
- US-A- 6 078 108

## Description

### Field

This relates to opening, or interrupting, a current conduction path. In particular, this relates to a switch including a pyrotechnic actuator for opening a current conduction path, and a method for operating a switch involving ignition of a pyrotechnic actuator.

### Background

Current conduction paths can be opened by breaking a continuous conductor which defines the current conduction path. One approach is to use a pyrotechnic based switch to break the continuous conductor.

It is desirable to provide an improved apparatus for opening a current conduction path.

Such an improved apparatus is desirable for applications which require reliable and rapid opening of a current conduction path, for example, batteries in electric vehicles or electrical overload mechanisms for industrial processes.

US patent 6,078,108 discusses an apparatus according to the preamble of claim 1 for interrupting the flow of current in a cable. The cable leads from the battery in a motor vehicle to a consumer, also located in the vehicle, such as the starter, engine or the like. A housing is provided, having two connection terminals, electrically insulated from one another, for the lines leading to the battery and to the consumer. A switch is disposed in the interior of the housing, the switch being assigned a control device which can be tripped by a sensor and whose tripping actuates the switch.

### Summary

In a first aspect, a switch is provided as defined in the appended independent apparatus claim, with optional features defined in the dependent claims appended thereto. In a second aspect, a method of operating the switch of the first aspect is provided as defined in the appended independent method claim.

In the following specification, a switch for opening a current conduction path is described. The switch comprises: an ignition chamber; a pyrotechnic actuator arranged to release gas into the ignition chamber upon ignition; a first conductor and a second conductor, the first and second conductors comprising connection contacts; and a third conductor moveable in a direction from a first position towards a second position upon (i.e. in response to) actuation by the pyrotechnic actuator. In the first position the third conductor is resiliently supported between, and in electrical contact with, the first and second conductors to define a current conduction path; in the second position the third conductor is physically and electrically separate from at least one of the first and second conductors, optionally from both of the first and second conductors. In this way, the current conduction path is opened.

Previous pyrotechnic based switches (or automatic pyrotechnic based circuit breakers) haverelied on a linear arrangement to break a single, or continuous, conductor. For example, a linear displacement of a pyrotechnically actuated piston would cut the conductor into two segments under awedge type action to interrupt the current. This arrangement may be suitable for some low current applications. However, for higher current applications, the conductor to be broken is typically thicker or wider and therefore high forces are required in order to break the conductor. Such switches therefore typically utilise large pyrotechnic actuators, which leads to costly and bulky switch arrangements. By using three separate conductor pieces, which are joined only with a temporary joint (provided by the resilient member), significantly smaller forces may therefore be applied to break the electrical contact of the different conductors and open thecurrent conduction path. Thiscan lead to smaller and cheaper switches suitable for a range of current loads.

In particular, by resilient supporting the third, moveable, conductor in thefirst position with a resilient member, sufficient forces can be applied to ensure electrical contact is maintained between the first, second and third conductors, whilst facilitating quick and easy opening of the current conduction path once the pyrotechnic actuator is actuated through breaking of the temporary conductor joints provided by said resilient member.

This electrical contact is due to direct physical contact through the (electrically conductive) resilient member. Since no permanent conductor joints (or continuousconductor), need to be broken, less force is required and smaller pyrotechnic actuators may be used, facilitating the provision of smaller and cheaper switches.

The separation of thedifferent conductors in the manner described herein can also facilitate a reduction in the electric arc (or arcdischarge) formed when thedifferent conductors separate from one other. In particular, the movement of the moveable third conductor, relative to the first and second conductors, in response to the actuation (i.e. the linear translation of the third conductor) can rapidly stretch the arc, increasing the arc resistance. An increased arc resistance causes a corresponding increase in arc voltage and a decrease in arccurrent (since electrical arcs exhibit negative resistance). With the physical separation between the conductors which is achievable with the switch of the first aspect, the arc resistance can be quickly increased with time, and the current correspondingly reduced to such a value that heat formed by thecurrent passing through the air is not sufficient to maintain the arc-the arc is thus extinguished. As such, a more effective interruption of the electrical arc can be provided. A safer and more robust switch may therefore be provided.

When the switch is used in low current rating applications, the above described air break may be sufficient to extinguish the arc. However, in higher current rating applications, it may be desirable to improve arc interruption. Optionally, the switch further comprises arc extinguishing media, which is arranged to be disposed between the first and second conductors when thethird conductor is in the second position. The presence of the arc extinguishing media can increase the interruption of the electrical arc, facilitating the provision of a safer switch. In some arrangements, the switch further comprises an arc extinguishing media element coupled to the third conductor; the arc extinguishing media element is arranged to be moved into position between the first and second conductors when thethird conductor moves towards the second position. In other arrangements, a store of arc extinguishing media is provided, optionally within the ignition chamber; the arc extinguishing media is arranged to be pushed, by actuation of the pyrotechnic actuator, between the first and second conductors as the third conductor moves from the first position to the second position. Optionally, the arc extinguishing mediacomprises silica, and may be provided in any suitable form, such as a liquid, powder or other solid form, or a thick, viscous, semi-solid liquid.

Optionally, the switch further comprises a gas-generating element. The gas-generating element is formed of a material arranged to generate gas when exposed to the heat generated by the electrical arc. Any ablative polymer or resin with low thermal conductivity can be used; such polymers/ resins form gases when heated to elevated temperature (as occurs in the presence of an electric arc), which gases form a heat resistant layer over thepolymer/resin. These gases can also act to reduce the conductivity of the environment within the switch (i.e. to increase the resistance), increasing the arc voltage and reducing the arc current, and thus facilitating improved interruption of the arc. Asafer switch may therefore be provided. The gas-generating element may be coupled to the third conductor, or may be otherwise provided in the vicinity of the conductors, to facilitate this effect. Optionally, the gas-generating element is an ablative polymer, optionally, an ablative polymer comprising polyoxymethylene (POM), polyamide PA66, or polytetrafluoroethylene (PTFE).

Optionally, the resilient member is arranged to exert a force (for example, against the housing or another component) in a direction substantially perpendicular to the direction of movement of thethird conductor to retain the conductor (i.e. through the resulting frictional force). Substantially perpendicular as used herein means approximately 90 degrees, optionally up to and including ± 45 degrees.

According to the invention, the resilient member is formed by thethird conductor. According to the invention the third conductor comprises: a base member; and a plurality of electrical finger contacts distributed around the base member, wherein the plurality of electrical finger contacts form the resilient member.

The use of electrical finger contacts may be advantageous, since finger contacts can allow for the provision of an effective, low resistance, conduction path between the first/second conductor and thethird conductor. Thiscan improve the efficiency and reliability of the switch of the first aspect. Moreover, such finger contacts can be plated, for example with silver or silver alloys; this arrangement can further improve the conductivity, but may not significantly increase the cost of the switch dueto the small surface area of electrical contact to be plated.

Such an arrangement can be particularly beneficial for temporary joints, such as that employed within theswitch of thefirst aspect. In particular, theelectrical finger contacts, in addition to providing effective current conduction, can provide for a low contact pressure at the interface between thethird conductor and the first/ second conductors, particularly as compared to an interference or bolted joint. As a result, for the same conductor geometry, lower forces may therefore be required to separate the third conductor from thefirst and second conductors. A smaller pyrotechnical actuator may therefore be provided, facilitating the provision of a smaller, lighter and cheaper switch. However, it will be understood that such an effect can be provided by any suitable resilient member, as will be described in moredetail below.

Optionally, the base member comprises a ring, wherein the plurality of electrical finger contacts are arranged in an annular ring around the base member. This arrangement may provide for the provision of a more efficient spring mechanism, whilst also providing for an even distribution of electrical finger contacts forming the third conductor. Such asymmetrical arrangement may also be easier to manufacture than other arrangements with more complex geometries, and can facilitate the provision of a switch which is easier to assemble (since the resilient member can provide the desired retaining force and electric contact, regardless of its particular orientation within the switch).

According to the invention, the third conductor comprises a retainer arranged, for each of the plurality of electrical finger contacts, to retain aportion of theelectrical finger contact in electrical and physical contact with the third conductor and to urge portions of the electrical finger contact located either side of the retained portion away from the base member and into electrical and physical contact with at least one of thefirst and second conductors, wherein the urged portions of the plurality of electrical finger contacts form the resilient member.. In this way, the third conductor can be provided in electrical contact with the first and second conductors through the electrically conductive finger contacts.

The base member (whether shaped as a ring or otherwise) may be conducting or may be insulating. The conductivity of the base member is dependent, among other factors, on a current rating for which the switch is to be used; a conducting ring can facilitate heat dispersion and allow for asmaller cross-section of the electrical finger contacts in higher current ratings, but in other, smaller current rating applications, an insulating base member may be provided. The retainer may be insulating or may have a high resistivity, and may be formed of a polymer or ceramic, or any other suitable material.

By providing finger contacts, each having a portion retained in contact with the base member and portions which are urged away from the base portion, a spring-type mechanism (i.e. the resilient member) can be provided. In particular, the physical contact between the electrical finger contacts forming the third conductor and the first and second conductors provides the requisite electrical contact to define the current conduction path across the conductors, whilst also providing the resilience and physical contact needed to retain the third conductor in the first position. The electrical finger contacts are arranged to exert a force in a direction substantially perpendicular to the direction of movement of the third conductor -the resulting frictional force arising between the electrical finger contacts and the first and second conductors acts to prevent movement of thethird conductor.

Optionally, thethird conductor isfurther retained in thefirst position by recesses arranged to receive part of theresilient member. Optionally, said recesses are formed within the first and/or second conductors. Alternatively, the recesses may be formed within any other suitable part of the switch to receive part of the resilient member and facilitate retention of the third conductor until actuation of the pyrotechnic actuator. For example, when the first and/or second conductor forms the resilient member, recesses may be provided within the third conductor. Optionally, the recesses are arranged to receive the urged portions of the plurality of electrical finger contacts, described above. Such recesses can protect the switch against movement of thethird conductor due to large vibrations, for example, without requiring a high force to be exerted by the resilient member itself. Since only small forces need to be applied to open the current conduction path, a smaller and lighter switch may therefore be provided.

Optionally, the pyrotechnic actuator is arranged to release gas into the ignition chamber in a direction substantially parallel to the direction of movement of the third conductor to actuate the third conductor. Such an arrangement may provide for the most efficient transfer of energy between the pyrotechnic actuator to the third conductor. Substantially parallel as used herein means approximately 0 degrees, optionally up to and including ± 45 degrees.

Optionally, a piston is arranged between thethird conductor and the pyrotechnic actuation, the piston comprising avoid which at least partially defines the ignition chamber. The actuation force from the pyrotechnic actuator is transferred to the third conductor through the piston. When the ignition chamber is at least partially defined by the void in the piston, a smaller ignition chamber may be provided (at least initially, it will be understood that the ignition chamber will expand in size as the piston moves). Fewer explosives may therefore be required to produce a desired pressure on the piston, which can provide for a more efficient switch.

Optionally, the switch further comprises a housing arranged to enclose the ignition chamber, thethird conductor, and at least a portion of each of thefirst and second conductors. Optionally, the housing may enclose at least part of the pyrotechnic actuator. In some arrangements, the pyrotechnic actuator is replaceable and may not be provided within the housing. A replaceable pyrotechnic actuator provides for a reusable switch, which has a lower environmental cost than non-reusable switches. Such a switch may also be cheaper over its lifetime than non-reusable switches.

When the pyrotechnic actuator is replaceable, the switch may further comprise a reset mechanism arranged to move the third conductor from the second position to the first position after actuation by the pyrotechnic actuator. This may be a lever or a switch, or any other suitable mechanism. The switch may then be used again. In embodiments where the switch is arranged to be settable, or reusable, arc extinguishing media may not be provided within the switch, in order to ensure good electrical contact between the conductors when the switch is reset.

A system is provided comprising a switch as described above and a controller arranged to provide a signal to the pyrotechnic actuator to ignite the pyrotechnic actuator. Such a system may be used in any suitable application where a switch (or automatic circuit breaker, where an activation trigger is provided) isrequired, such as for overload in industrial applications, for example.

A vehicle is provided comprising a switch as described above. Optionally, the vehicle may further comprise a controller arranged to provide a signal to the pyrotechnic actuator to ignite the pyrotechnic actuator. Optionally, the vehicle is an electric vehicle. The switch may be used, for example, to break a circuit in a battery of the vehicle in case of an accident. This may improve safety.

In the following specification, a method according to claim 11 is described.

### Brief Description of the Drawings

The following description is with referenceto the following Figures:
Figure 1: Figure 1A shows a schematic cross section of a switch in accordance with the invention, where the switch is in a first, closed, position, Figure 1B shows a perspective view of the switch of Figure 1A, and Figure 1C shows across section of the perspective view of Figure 1B;
Figure 2 illustrates a schematic cross section of the switch of Figure 1, where the switch is in a second, open, position;
Figure3: Figure 3A illustrates a perspective view of a third conductor forminga resilient member of a switch, Figure3B illustrates across section of the perspective view of Figure3A, and Figure 3C illustrates elements of thethird conductor and resilient member (or resilient portion of thethird conductor) in the absence of the base member;
Figure4A illustrates a top-plan view of a schematic of a resilient member and third conductor of aswitch in accordance with an example which is not part of the invention;
Figure 4B illustrates a side view of a schematic of theresilient member of Figure 4A within a switch; and
Figure 5 illustrates a vehicle comprising the switch of the invention;
Figures illustrates a method in accordance with the invention;
Figure 7: Figure 7A shows a schematic cross section of a switch which is not part of the invention, where the switch is in a first, closed, position, and Figure 7B shows a schematic cross section of the switch of Figure 7A, where the switch is in a second, open, position;
Figure 8 shows a perspective view of some of the internal components of the switch of Figure7, i.e. those components within the housing;
Figure 9: Figure 9A shows a schematic cross section of another switch, which is not part of the invention, where the switch is in a first, closed, position, and Figure 9B shows a schematic cross section of theswitch of Figure 9A, where the switch is in asecond, open, position;
Figure 10 shows a perspective view of some of the internal components of another switch, which is not part of the invention, when the switch is in the first position; and
Figure 11 shows a cross section of a portion of the switch of Figure 10 when the switch is in the second position.

### Detailed Description

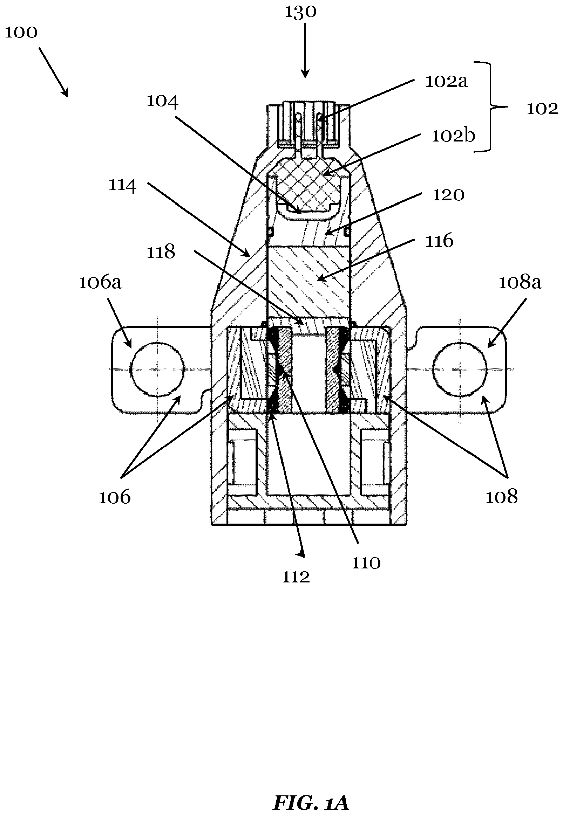

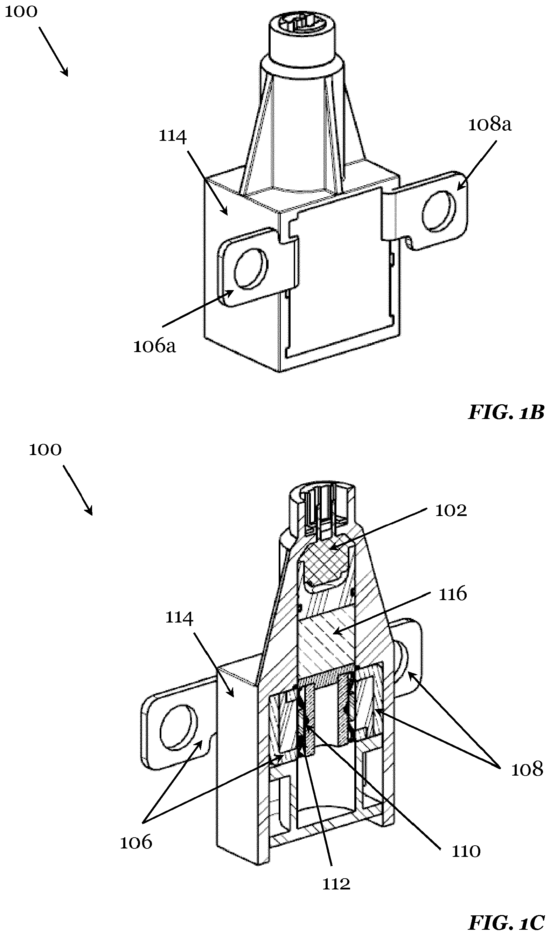

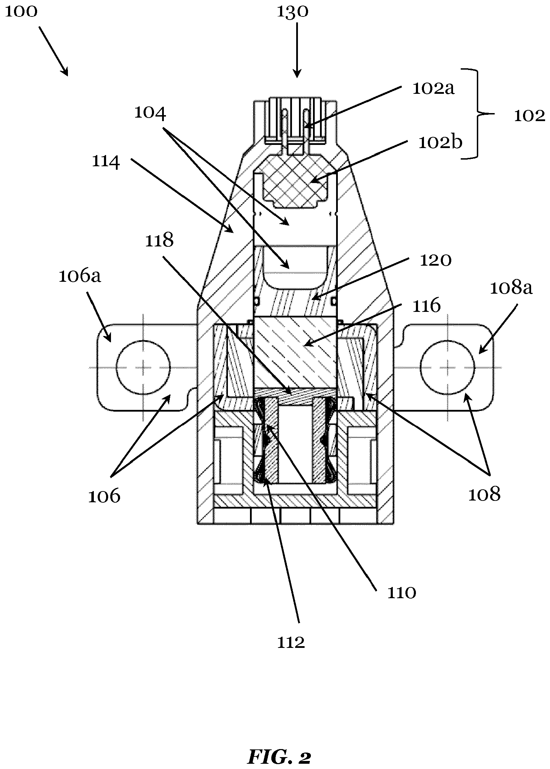

With reference to Figure 1 (Figures 1A, 1B, 1C) and Figure 2, a switch 100 for opening a current conduction path isdescribed. Thecurrent conduction path isdefined by a first conductor 106, a second conductor 108 and a third conductor 110. These conductors are separate components, arranged to define a current conduction path by way of a temporary joint between the first 106, second 108 and third 110 conductors.

Switch 100 comprises a housing 114 arranged to enclose the third conductor, and at least aportion of each of the first and second conductors 106, 108. First 106 and second 108 conductors here comprise connection contacts 106a, 108a provided outside of housing 114 for connection of switch 100 to oneor moreelectrical circuits. The first and second conductors are hereprovided in the form of plates with holesto receive the third conductor, and thethird conductor connects the first and second conductors vertically. Any other suitable arrangement may be provided.

The temporary joint is provided by way of a resilient member 112, here formed from the third conductor 110, which acts to resiliently support thethird conductor 110 in electrical contact with thefirst and second conductors 106, 108. In other words, the third conductor resiliently supports itself. In this arrangement the resilient member 112 is electrically conductive in order to provide the electrical contact between the different conductors(106, 108, and 110); thethird conductor 110 isin electrical contact with the first and second conductors 106, 108 via the resilient member 112 (i.e. through the resilient portion of thethird conductor).

In other example arrangements, which are not part of the invention, the resilient member 112 may be a separate component to any of the first, second and third conductors and the third conductor 110 may be in direct electrical and physical contact with the first and second conductors to define the current conduction path. Alternatively, in some arrangements, which are also not part of the invention, the resilient member 112 may be a separate component to any of the first, second and third conductors, but the resilient member 112 may be electrically conductive and the third conductor 110 may be in electrical contact with thefirst and second conductors 106, 108 through the resilient member 112.

In the group of embodiments described with reference to Figures 1 and 2, the resilient member 112 is resilient through form and is electrically conductive, in order to define the current conduction path. However, it will be understood that in other alternative embodiments or arrangements, which are not part of the invention, for examplewhen thethird conductor 110 is in direct contact with the first and second 106, 108 conductors, the resilient member may be resilient through material and optionally form. For example, the resilient member 112 can comprise an insulating, resilient material, such as rubber. At least one resilient member may be provided, for example there may be one, two, three, four, or more, as required.

Theresilient member 112 resiliently supports or retains the third conductor 110 by exerting, or applying, a force in a direction substantially perpendicular to a direction of movement of thethird conductor when the switch is in operation; the frictional force between the resilient member and the surfaces of the switch housing 114 it contacts (or the surfaces of any other component it contacts), which arises in response to this applied force, acts to resist motion of thethird conductor until an actuating force greater than the resistive, frictional, force is applied. In some example implementations (not illustrated), recesses are provided within the switch, for example within the switch housing 114 or within the first and/or second conductors 106, 108 to receive part of theresilient member 112. In this way, thethird conductor 110 maybe further retained in the first, closed, position by said recesses, and can therefore be subjected to larger vibrations from the environment in which it is deployed without the switch opening. Thiscan improve the resilience and utility of the switch 100.

An actuating force is here provided by a pyrotechnic actuator 102, arranged to release gas into an ignition chamber 104 upon ignition. The pyrotechnic actuator 102 comprises connector pins 102a and an igniter 102b. The connector pins 102a activate a charge inside the igniters 102b upon receipt of an ignition signal. The pyrotechnic actuator 102 isarranged to, upon activation or ignition of the charge, expel gas into the ignition chamber 104. In this arrangement, the switch comprises a piston 120, which piston comprises a void that defines the ignition chamber. However, it will be understood that the piston may not be provided within the switch, and the ignition chamber may be otherwise defined (for example, it may be defined by avoid provided within the housing).

The high-pressure gases which are expelled into the ignition chamber 104 produces an actuating force which acts on the third conductor 110 to cause the third conductor to move from a first position (shown in Figure 1) towards a second position (shown in Figure 2) in a direction of movement 130. The pyrotechnic actuator is arranged to release gasinto the ignition chamber in a direction substantially parallel to the direction of movement 130 of thethird conductor to actuate the third conductor. In this arrangement the force acts on the third conductor 110 via the piston 120, but it will be understood that the force may act on thethird conductor 110 directly, or via any other suitable component provided between the pyrotechnic actuator 102 and thethird conductor 110. When thethird conductor is in the first position the switch is closed, and when it is in the second position the switch is open. In the second, open position, thethird conductor is electrically separate from the first and second conductors such that no current can flow through the current conduction path.

As can be seen in Figure2, in some embodiments the third conductor isnot electrically separate from both of the first and second conductors in the second position; electrical separation from at least one of the first and second conductors(in Figure2 it isfrom the first conductor) allows opening of the current conduction path and stops the flow of current. In other words, in the second position the third conductor may only be electrically and physically separate from the first conductor, and may still be in electrical and physical contact with the second conductor. By allowing physical contact between the second and third conductors, as seen in Figure2, a smaller switch may be provided (as compared to arrangements in which the third conductor is physically separate from both the second and third conductors) whilst still allowing opening of the current conduction path.

Breaking of the temporary joint between the first, second and third conductors, and the subsequent opening of the current path, can lead to formation of an arc between the ends of the third conductor 110 and respective ends of the first and second conductors 106, 108. This phenomenon can occur whenever conductors physically separate from one another. The linear displacement of the third conductor relative to the first and second conductors can facilitate a reduction in this electric arc (or arc discharge) by rapidly stretching the arc, thereby increasing the arc resistance. An increased arc resistance causes a corresponding increase in arc voltage and a decrease in arc current (since electrical arcs exhibit negative resistance). The speed of displacement which occurs, due to the dynamic nature of the force applied by the pyrotechnic actuator and the fact that the conductors do not need to be physically broken in any way, can act to increase the physical separation of the respective conductors quicker than with previous linear approaches, leading to more effective interruption of the electrical arc. A safer and more robust switch may there be provided.

Arc interruption or extinguishing can be further improved through the use of a gas-generating element 118 coupled to thethird conductor. The gas-generating element of this group of embodiments is formed of an ablative polymer comprising polyoxymethylene (POM), which is arranged to generate gas when exposed to the heat generated by the electrical arc. Alternatively, the gas-generating element can be any other suitable ablative polymer, for example, polyamide PA66 or polytetrafluoroethylene (PTFE), an ablative resin, or any other suitable material. The gases generated can act to reduce the conductivity of the environment within the switch, further reducing the arc current and thus facilitating improved interruption of the arc. A safer switch may therefore be provided. Gas-generating element 118 can optionally be provided in any suitable location within the switch to reduce the electrical arc, and may not be coupled to the third conductor.

Arc interruption or extinguishing can be further improved through the use of arc extinguishing media. In this arrangement, arc extinguishing media 116 is arranged to be disposed between the first and second conductors when the third conductor is in the second position, as illustrated in Figure 2. In this arrangement, the switch may comprise a store of arc extinguishing media 116. As the third conductor is displaced upon (i.e. in response to) actuation of the pyrotechnic actuator 102, the media 116 is correspondingly displaced to fill the gap vacated by the third conductor 110; such displacement may be by piston 120, when the piston is provided within the switch. Alternatively, an arc extinguishing media element 116 can be provided which is coupled to thi rd conductor 110 and arranged to be moved into the gap vacated by the thi rd conductor 110 as the third conductor moves. It will be understood that the arc extinguishing media can be provided in any other suitable arrangement to facilitate interruption or extinguishing of the electric arc. In this group of embodiments, the arc extinguishing media 116 comprises silica, provided in athick, viscous, semi-solid liquid. However, it will be understood that the arc extinguishing media 116 can comprise silica in any suitable form, for example, in liquid or solid (such as a powder) form. Alternatively, any other suitable arc extinguishing media may be used.

in some example implementations, the pyrotechnic actuator 102 is replaceable and the switch comprises a reset mechanism, such as a switch or a lever, which is arranged to move the third conductor 110 from the second position to thefirst position after actuation by the pyrotechnic actuator 102. The switch 100 may therefore be reused. In such arrangements, arc extinguishing media may not be provided within the switch, to ensure good electrical conductor ismaintained between the conductors over time and over multiple uses.

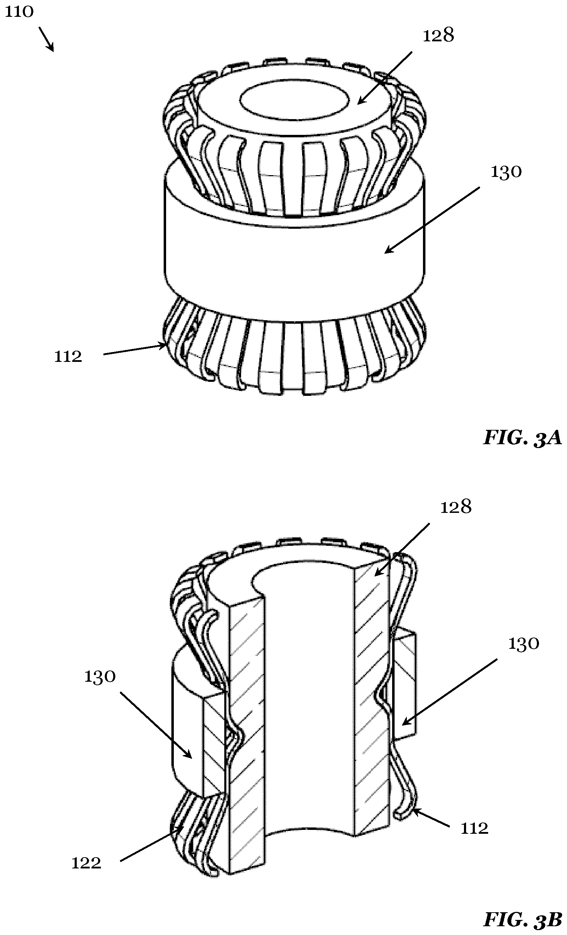

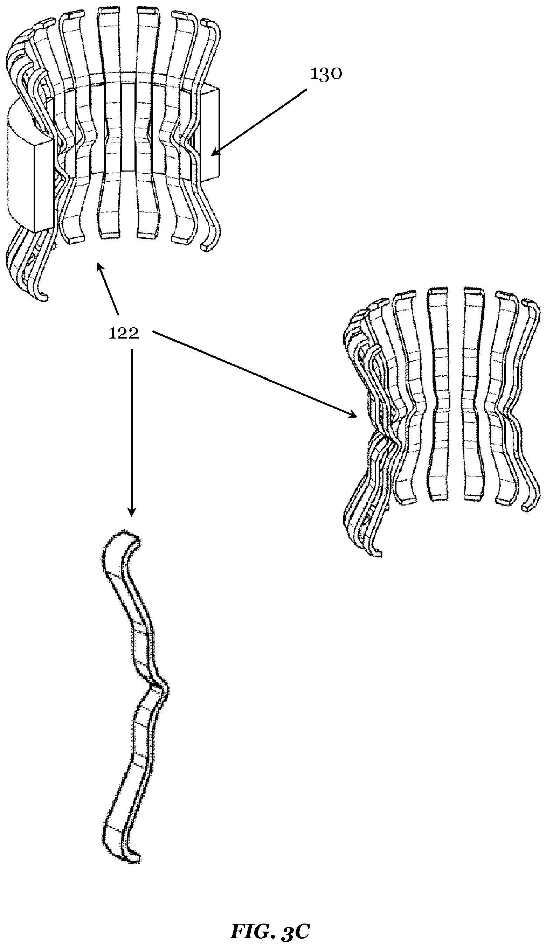

With reference to Figures (Figures 3A, 3B and 3C), an example third conductor 110 forming a resilient member 112 is described. In this arrangement, theresilient member is formed from, or comprises, a plurality of electrical finger contacts 122 distributed around a base member 128 of the third conductor 110. The base member 110 is provided in the form of ring 128 (optionally a conducting ring), and the plurality of electrical finger contacts 122 are arranged in an annular ring around the base member 128 to form thethird conductor 110. An (optionally insulating retainer) 130, here an insulating ring 130, is arranged around the electrical finger contacts 122 such that the electrical finger contacts are provided between the insulating retaining 130 and the base member 128. The retainer 130 may comprise grooves arranged to receive the electrical finger contacts, which arrangement may assist in retaining the electrical finger contacts, and in facilitating assembly of thethird conductor.

The retainer 130 is arranged, for each of the plurality of electrical finger contacts 122, to retain a portion of theelectrical finger contact in electrical and physical contact with the base member 128 and to urge portions of the electrical finger contact located either side of the retained portion away from the base member 128 (and into electrical and physical contact with at least one of the first and second conductors 106, 108 when the third conductor 110 isinstalled inside the switch 100). Theurged portions form the resilient member 112. Thethird conductor 110 is in electrical contact with the first 106 and second 108 conductors via the resilient member 112 of thethird conductor to define the current conduction path. In particular, each finger contact acts as an individual third conductor, connecting the plate like first and second conductors 106, 108.

By providing finger contacts, each having a portion retained in contact with the base member 128 and portions which are urged away from the base member 128, a spring-like mechanism can be provided as the resilient member 112. In particular, the physical contact between the electrically conductive finger contacts 122 of thethird conductor 110 and the first and second conductors 106, 108 provides the requisite electrical contact to define the current conduction path across the different conductors, whilst also providing the physical contact needed to form a temporary joint and retain the third conductor in the first position prior to actuation of the pyrotechnic actuator 102. As discussed above, the electrical finger contacts 122 are arranged to exert aspring-like force in a direction substantially perpendicular to thedirection of movement 130 of the third conductor -the resulting frictional force arising between the electrical finger contacts 122 and the first and second conductors 106, 108 acts to prevent movement of thethird conductor 110 prior to actuation, whilst facilitating rapid separation of the different conductors upon actuation of the pyrotechnic actuator 102.

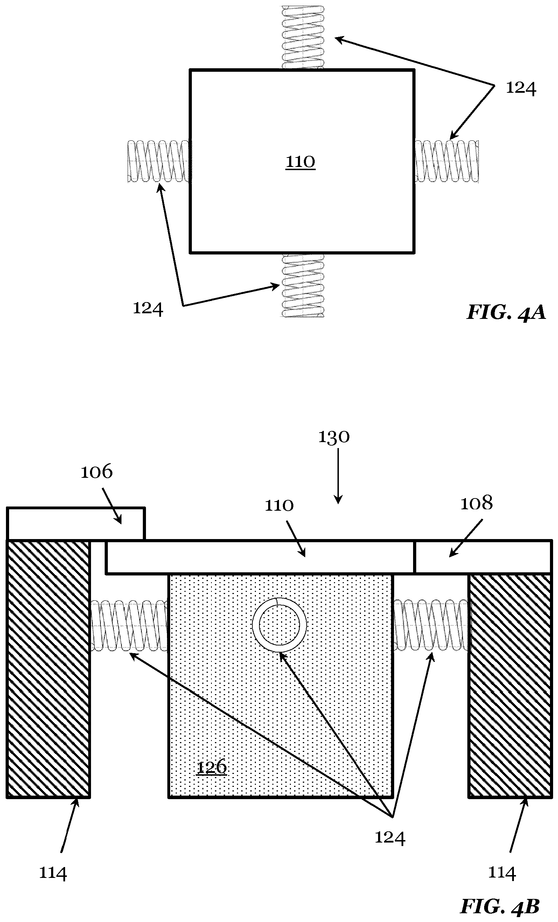

With reference to Figures 4A and 4B, another example of a resilient member 112 which is not part of the invention is described, in which theresilient member is a separate component to thethird conductor. In this arrangement, the resilient member 112 comprises a plurality of resilient elements 124 distributed around, and coupled to, an (optionally insulating retainer) 126, which is itself coupled to the third conductor 110. The retainer may a cube or acylinder, for example, or may be any other suitable shape, as required. It will be understood that, depending on the configuration of the resilient member 112, retainer 126 does not need to be insulating; when retainer 126 is coupled to third conductor 110 in such away as to be electrically isolated from thethird conductor, retainer 126 can comprise any suitable conducting or non-conducting material (for example, copper or plastic).

The third conductor 110 is arranged to be provided in direct electrical and physical contact with the first 106 and second 108 conductors to define the current conduction path. It can be seen that such contact can be achieved in any suitable manner. For example, an end surface of the third conductor 110 may contact the end surface of another conductor (as illustrated here between the third conductor and the second conductor 108). Additionally or alternatively, a contact surface of thethird conductor may extend in a direction generally perpendicular to a direction of movement 130 of the third conductor and contact a corresponding surface of another conductor (as illustrated here between thethird conductor and thefirst conductor 106). Thiscan provide for good electrical contact between the different conductors. Generally perpendicular as used herein means approximately 90 degrees, optionally up to and including ± 45 degrees; however, it will be understood that the advantages of a good electrical contact can be achieved by surfaces at any angle, provide a good physical contact isprovided between the conductors. Thethird conductor 110 is here formed in the shape of a rectangle, but any other suitable geometry may be used to provide the requisite physical contact with the first and second electrical contacts and the desired low forces for separation of said conductors. For example, thethird conductor 110 may be frustoconical and thefirst and second conductors shaped correspondingly to receive said third conductor.

The springs 124 provide the contact forces needed to form a temporary joint between thedifferent conductors and retain thethird conductor in the first position prior to actuation of the pyrotechnical actuator 102. In particular, the springs 124 exert a force in a direction substantially perpendicular to thedirection of movement 130 of thethird conductor -the resulting frictional force arising between the springs 124 and, for example, the housing 114 of the switch 100 acts to prevent movement of thethird conductor 110 prior to actuation. It will be understood that any other suitable resilient member 112 comprising resilient elements (resilient through form and/or material) may be used in the switch described herein. For example, the springs 124 may be replaced by rubber protrusions to retain the third conductor 110. Insulating retaining member(s) may be provided in such embodiments because the electrical conduction path isdefined by the direct electrical and physical contact of the first, second and third conductors, rather than the conduction path being defined via the resilient member (as is described in Figures 1 and 2).

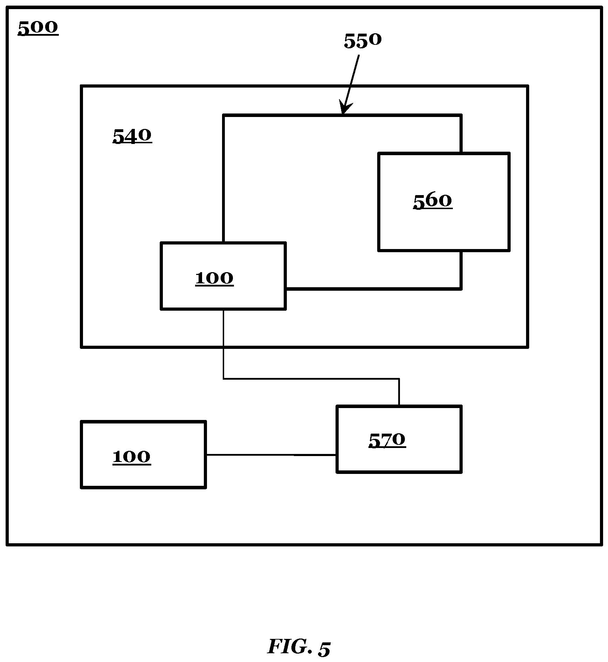

With reference to Figure 5, a powertrain 540 comprising switch 100 is described. In particular, powertrain 540 can be a powertrain for a vehicle 500. In regard to a vehicle (e.g. amotor vehicle, aship or boat, or aplane, etc.), a powertrain encompasses the main components that generate power and deliver it to the road surface, water, or air. This includes the engine, transmission, drive shafts, and the drive wheels (or other drive mechanism, such as a propeller). In an electric or hybrid vehicle, the powertrain 500 also includes battery 560 and an electric motor, for example. Switch 100 may be connected, via the connection contacts of the first and second conductors, to an electrical circuit 550 within vehicle 500, which electrical circuit may optionally include the battery 560. Alternatively, vehicle 500, which may be an electrical vehicle, can comprise switch 100 in the absence of powertrain 540, as illustrated in Figure 5.

An ignition signal may be provided to connector pins 102aof the pyrotechnical actuator 102 from a remote controller, or a remote power distribution unit, 570 within the vehicle 500. Such an ignition signal may be issued in response to an external event. For example, when the switch 100 is connected to a battery 560 installed in the vehicle 500, an ignition signal may be sent to the pyrotechnic actuator 102 in response to a collision of the vehicle; activation of the charge inside the igniter 102b can cause the third conductor 110 to be separated from the first and second conductors in order to open the electrical circuit 550 and prevent the flow of current through the battery 560. Such an arrangement can improve safety in the event of a collision. Alternatively, switch 100 and remote controller 570 can be deployed in any other application where such breaking of a circuit is required.

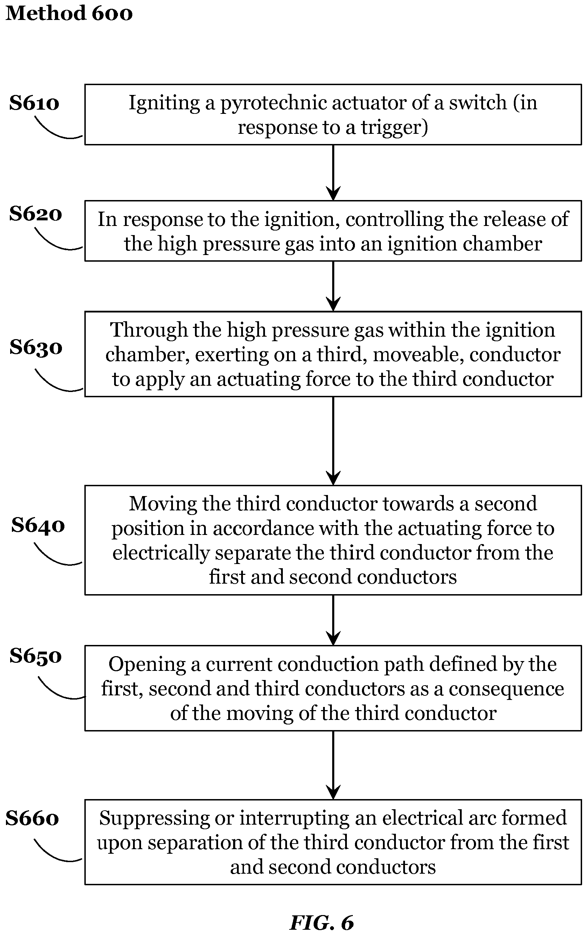

With referenceto Figure6, a method 600 for opening a current conduction path using a switch 100 (for example, the switch 100 according to the invention) is described.

At step 610, the method comprises igniting a pyrotechnic actuator, optionally in responseto a collision or other external event triggering an ignition signal which is received by the pyrotechnic actuator. Any other trigger can be used for ignition of the pyrotechnic actuator. Upon ignition of the pyrotechnic actuator, at step 620, high-pressure gas is released into the ignition chamber. This released gas exerts a pressure (either directly or indirectly) on a third, moveable, conductor 110 at step 630, which is resiliently supported in a first position. Optionally, thethird conductor is arranged within the ignition chamber. Optionally, pressure is exerted by way of a piston, the piston comprising avoid which at least partially defines the ignition chamber. In the first position, thethird conductor 110 isarranged between, and in (direct or indirect) electrical contact with, first 106 and second 108 conductors to define a current conduction path.

At step 640, the third conductor ismoved, i.e. displaced, between the first position and a second position. In thesecond position, thethird conductor 110 is electrically separate from at least one of thefirst and second conductors 106, 108, as shown in Figure2; in other words, switch 100 isopen. Movement of thethird conductor at step 640 in response to the pressure exerted at step 630 therefore causes opening of the current conduction path (step 650).

Optionally, at step 660, an electrical arc formed upon separation of thethird conductor from the first and second conductors is suppressed, or interrupted. This interruption may be achieved solely by the relative movement of the third conductor, or by the release of arc extinguishing media, for example, a media comprising silica.

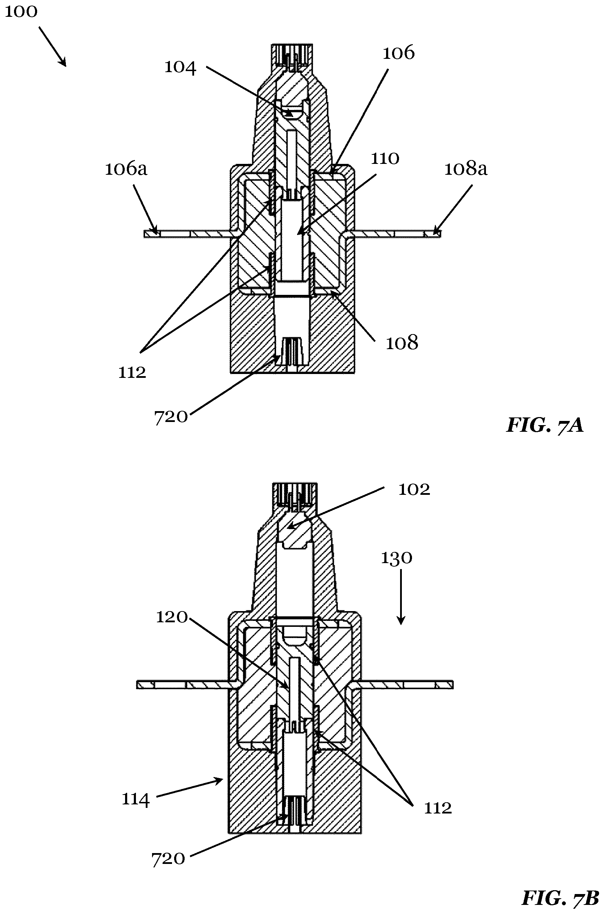

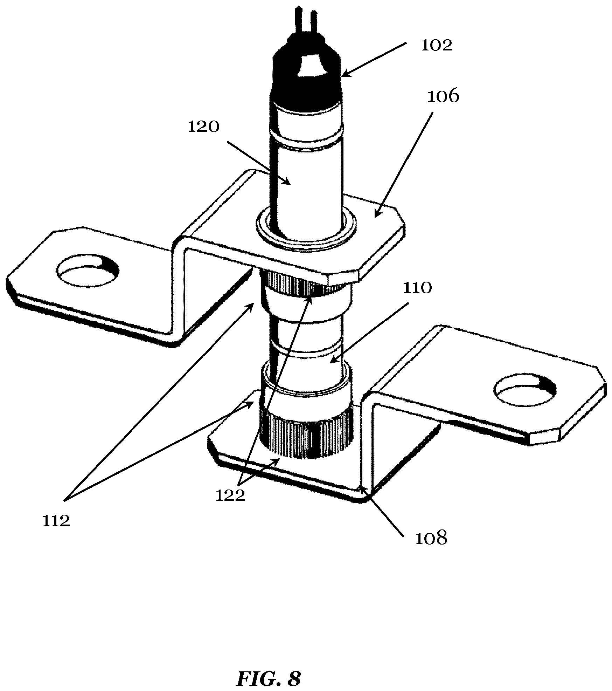

Another example, which is not part of the invention, of the isolating switch 100 is described with reference to Figures 7and 8; for consistency, the same reference numerals are used for components similar or equivalent to those described above, or for those components which operate in the same way.

A current conduction path is defined by a first conductor 106, a second conductor 108 and a third conductor 110, when thethird conductor is in the first position (Figure7A). These conductors are separate components, arranged to define a current conduction path by way of a temporary joint between the first 106, second 108 and third 110 conductors. The temporary joint is again provided by resilient member 112, but the resilient member is here connected to (or formed from) the first and second conductors, rather than thethird conductor (as in Figure 1). The resilient member 112 can be formed from the first and second conductors 106, 108, or can be formed as separate component to the first and second conductors (and to the third conductor 110), as is shown in more detail in Figures. Theresilient member 112 is here electrically conductive and is in direct electrical and physical contact with each of first and second conductors to define the current conduction path through the movable third conductor 110.

By providing finger contacts 122, which here each have a portion retained in contact with the first and second conductors (which portions can be seen around the outside of the holes in Figure 8) and portions which are urged towards a centre of the hole in which the third conductor 110 is to be disposed (the urged portions of the finger contacts 122 which retain the third conductor are not visible in Figure 8), a spring-like mechanism can be provided as the resilient member 112. In particular, the physical contact between the electrically conductive finger contacts 122 of the first and second conductors 106, 108 and the moveablethird conductor 110 provides the requisite electrical contact to define the current conduction path across the different conductors, whilst also providing the physical contact needed to form a temporary joint and retain thethird conductor in thefirst position prior to actuation of the pyrotechnic actuator 102. Asdiscussed above, the electrical finger contacts 122 are arranged to exert a spring-like force in a direction substantially perpendicular to thedirection of movement 130 of the third conductor -the resulting frictional force arising between the electrical finger contacts 122 and thethird conductor 110 acts to prevent movement of thethird conductor 110 prior to actuation, whilst facilitating rapid separation of the different conductors upon actuation of the pyrotechnic actuator 102.

Switch 100 comprises a housing 114 arranged to enclose the third conductor, and at least a portion of each of thefirst and second conductors 106, 108. First 106 and second 108 conductors here comprise connection contacts 106a, 108a provided outside of housing 114 for connection of switch 100 to one or more electrical circuits. The first and second conductors are here provided in the form of plates with holesto receive the third conductor, with the resilient member 112 disposed around the edge of each hole. Thethird conductor connects the first and second conductors vertically; in other words, thefirst and second conductors are displaced in avertical direction and thethird conductor extends between them, retained by the resilient member 112. However, any other suitable arrangement may be provided, as appropriate.

In the group of examples described with reference to Figures 7 and 8, the resilient member 112 is resilient through form and is electrically conductive, in order to define the current conduction path. The resiliency can be provided in part by the geometry and arrangement of the electrical finger contacts 122 of the resilient member 112. The resilient member 112 resiliently supports or retains the third conductor 110 by exerting, or applying, a force in a direction substantially perpendicular to direction 130 of the third conductor 110 when the switch is in operation, as described above.

An actuating force is here provided by a pyrotechnic actuator 102, arranged to release gas into an ignition chamber 104 upon ignition. The high-pressure gases which are expelled into the ignition chamber 104 produces an actuating force which acts on the third conductor 110 to cause the third conductor to move from a first position (shown in Figure7A) towards a second position (shown in Figure7B) in a direction of movement 130, as described above. When the third conductor is in the first position theswitch isclosed, and when it is in the second position theswitch isopen. In the second, open position, thethird conductor is electrically separate from at least one of the first and second conductors such that no current can flow through the current conduction path. As can be seen in Figure 7B, the third conductor may onlybe electrically separatefrom thefirst conductor, and maystill bein electrical and physical contact with thesecond conductor; no current will flow, despite this electrical contact, since thecurrent conduction path isopen (and because the piston 120 is formed of an insulating material). By moving the insulating piston into the space vacated by the third conductor, arc suppression upon physical separation of thethird conductor from thefirst conductor may be improved.

The third conductor 110 may be coupled to the piston 120; this coupling may be by snap fit, interference fit, threaded connection, or any other suitable connection. This connection can simplify assembly of the device. The third conductor may also engage with aconnection member 720 of the switch 100 when in the second position; this engagement may be by way of snap fit, where the engagement is due to e.g. the force applied to the third conductor by the actuator 102. The connection member may be coupled to or integral with the housing 114. Such engagement or connection can help retain the third conductor in the base of the housing 114 after the switch is actuated. In embodiments were the pyrotechnic actuator 102 is replaceable, the connection member 720 may facilitate release of thethird conductor without permanent damage to either component; for example, the connection member may be resiliently deformable.

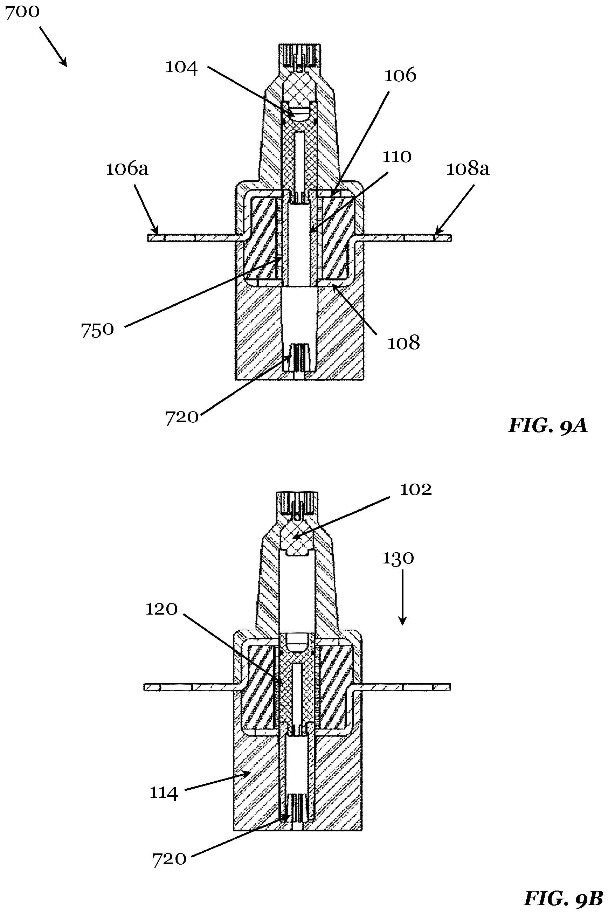

An alternative form of isolating switch 700 isdescribed with reference to Figures9 to 11; these alternative isolating switches also employ a temporary joint to retain a vertically orientated moveable third conductor in physical and electrical contact with a first and second conductor. The description of those aspects of these examples which overlap with aspects of the examples described above shall therefore be omitted. For consistency, the same reference numerals are used for components similar or equivalent to those described above, where appropriate.

With reference to Figures 9, 10 and 11, examples of switch 700, which are not part of the invention, are described. A current conduction path is defined by a first conductor 106, a second conductor 108 and a third conductor 110, when the third conductor is in the first position (Figure 9A). These conductors are separate components, arranged to define a current conduction path by way of a temporary joint to provide electrical contact between the first 106, second 108 and third 110 conductors. By using three separate conductor pieces, which are joined only with a temporary joint, significantly smaller forces may be applied to break the electrical contact of the different conductors and open the current conduction path than approaches which require breaking of a solid conductor body. The first and second conductors are here provided in the form of plates with holes to receive the third conductor, but any other suitable geometry may be used. Thethird conductor connects thefirst and second conductors vertically; in other words, thefirst and second conductors are displaced in avertical direction (i.e. direction 130) and thethird conductor extends between them, retained by the resilient member 112. However, any other suitable arrangement may be provided, as appropriate.

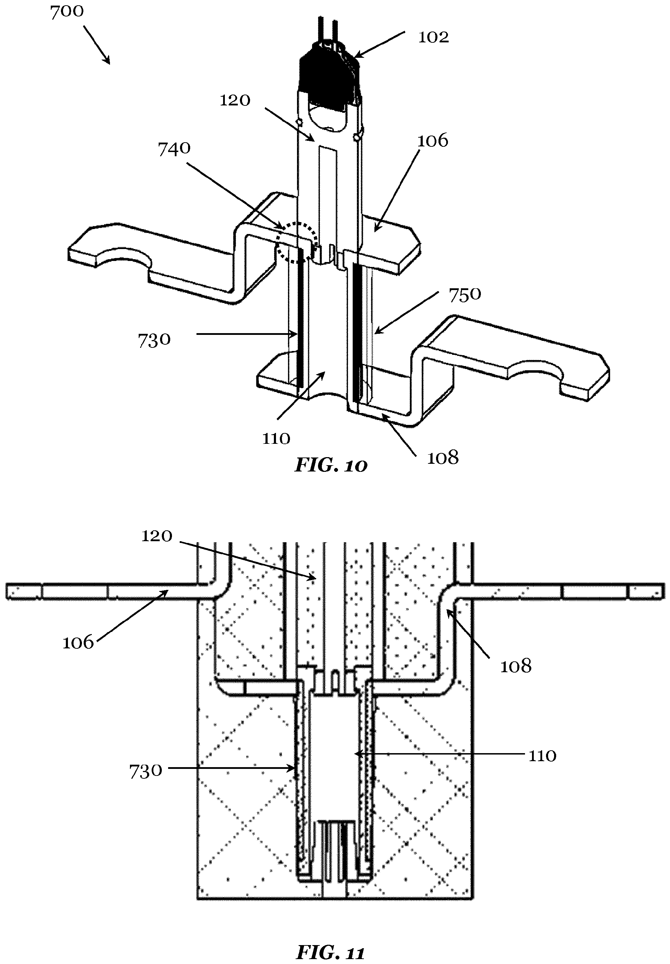

In the following examples, the temporary joint which provides the requisite electrical contact between the various conductor components 106, 108, 110 may be a push fit or interference fit, or any other temporary mechanical coupling between thedifferent conductors. The temporary joint may also be provided by meansof an electrically conductive adhesive or weld, for example, such that the third conductor 110 is not in direct physical contact with thefirst and/or second conductors, but isstill in electrical contact to define the current conduction path. In the example described herein, temporary joint 740 (highlighted by the dotted circle in Figure 10) is provided by an interference fit between the conductor components. It will be understood that the interference fit may extend around thethird conductor 110 such that thethird conductor is in continuous physical and electrical contact with thefirst and/or second conductors around its entire circumference, or the interference fit may be discontinuous, such that only a portion of thethird conductor is in physical and electrical contact with thefirst and/or second conductor. Similarly, whereother temporaryjoints are used other than interference fit, the joint may be continuous or discontinuous. Discontinuous contact may facilitate actuation of the switch with smaller force, since less force is needed to break the contact between the third conductor and the first and second conductors. The amount of contact required for effective operation may depend on the current rating of the switch.

In the following example, as described above with respect to switch 100, an actuating force is provided by a pyrotechnic actuator 102, arranged to release gas into an ignition chamber 104 upon ignition. The high-pressure gases which are expelled into the ignition chamber 104 produces an actuating force which acts on thethird conductor 110 to cause the third conductor to move from a first position (shown in Figure 9A) towards a second position (shown in Figure 9B) in a direction of movement 130. When the third conductor isin the first position the switch isclosed, and when it isin thesecond position the switch is open. In the second, open position, the third conductor is electrically separate from at least one of the first and second conductors such that no current can flow through the current conduction path. Thethird conductor 110 may also engage with aconnection member 720 of the switch 700 when in the second position, as discussed above.

In these examples, avoid 750 may be provided around thethird conductor 110. Here the void 750 is formed within the insulating material separating the first and second conductors. Due to the geometry of the specific switch 700 described herein, the void is an annular void around thethird conductor 110, but any other suitable geometry of void may be provided, as appropriate for the switch geometry. The insulating material may be formed of or comprise an arc extinguishing material such as silica gel, and/or the void can hold silicagel or silica sand, or any other arc extinguishing media, which may be provided in any suitable form, such as a liquid, powder or other solid form, or a thick, viscous, semi-solid liquid.

The third conductor may optionally be provided with an insulating member 730 disposed around the circumference of the conductor 110; as can be seen from Figure 10, such an insulating member 730 can be positioned within a recess of thethird conductor 110 and bordering the void 750 such that, in thefirst position, the electrical connection between the first, second and third conductors is not hindered. However, the insulating member 730 is arranged such that, as the third conductor 110 movesin direction 130 towards the second position, it isdisposed between thethird conductor and the second conductor (see Figure 11). The insulating member 730 may be plastic, or may be an ablative polymer, optionally PA6 or POM, etc. This intervening insulating member 730 provides a double break mechanism (as compared to the single break mechanisms described above), since the third conductor is then electrically separate from both the first and second conductors 106, 108 when in the second position. By interrupting the electrical contact between the first conductor and the third conductor with the movement of the third conductor in direction 130, and by interrupting the electrical contact between thethird conductor and the second conductor with the insulating member 730, arc suppression may be improved.

It is noted herein that while the above describes one embodiment of the invention, this description should not be viewed in a limiting sense. Rather, there are several variations and modifications which may be made without departing from the scope of the present invention as defined in the appended claims.

## Claims

1. A switch (100) for an electric vehicle (500), comprising:
an ignition chamber (104);
a pyrotechnic actuator (102) arranged to release gas into the ignition chamber upon ignition;
a first conductor (106) and a second conductor (108), the first and second conductors comprising connection contacts (106a, 108a); and
a third conductor (110) moveable in a direction from a first position towards a second position upon actuation by the pyrotechnic actuator, the third conductor comprising:
a base member (128), and
a plurality of electrical finger contacts (122) distributed around the base member;
wherein in the first position the third conductor is resiliently supported between, and in electrical contact with, the first and second conductors by a resilient member to define a current conduction path, and
wherein in the second position the third conductor is electrically separate from at least one of the first and second conductors so as to open the current conduction path;
**characterized in that** the third conductor further comprises a retainer (130) arranged, for each of the plurality of electrical finger contacts, to retain a portion of the electrical finger contact against the base member and to urge portions of the electrical finger contact located either side of the retained portion away from the base member and into electrical and physical contact with at least one of the first and second conductors, wherein the urged portions of the plurality of electrical finger contacts form the resilient member (112).

2. The switch of claim 1, wherein the third conductor is further supported in the first position by recesses arranged to receive part of the resilient member.

3. The switch of claim 1 or claim 2, wherein the resilient member is arranged to exert a force in a direction substantially perpendicular to the direction of movement of the third conductor.

4. The switch of any preceding claim, wherein the base member comprises a ring, and wherein the plurality of electrical finger contacts are arranged in an annular ring around the base member.

5. The switch of any preceding claim, wherein the pyrotechnic actuator is arranged to release gas into the ignition chamber in a direction substantially parallel to the direction of movement of the third conductor to actuate the third conductor.

6. The switch of any preceding claim, further comprising a housing (114) arranged to enclose the ignition chamber, the third conductor, and at least a portion of each of the first and second conductors.

7. The switch of any preceding claim, wherein the pyrotechnic actuator is replaceable.

8. The switch of any preceding claim, further comprising a reset mechanism arranged to move the third conductor from the second position to the first position after actuation by the pyrotechnic actuator.

9. A system comprising:
the switch of any preceding claim; and
a controller (570) arranged to provide a signal to the pyrotechnic actuator to ignite the pyrotechnic actuator.

10. A vehicle (500) comprising the switch of any one of claims 1 to 8 or the system of claim 9, optionally, wherein the vehicle is an electric vehicle.

11. A method for operating a switch for an electric vehicle, comprising:
igniting (610) a pyrotechnic actuator;
releasing (620), by the ignition, gas into an ignition chamber;
exerting (630), with the released gas, pressure on a third, moveable, conductor retained in a first position, the third conductor comprising:
a base member, and
a plurality of electrical finger contacts distributed around the base member;
wherein in the first position, the third conductor is resiliently supported between, and in electrical contact with, first and second conductors by a resilient member to define a current conduction path;
moving (640), by the exerted pressure, the third conductor from the first position and a second position, wherein in the second position the third conductor is electrically separate from at least one of the first and second conductors; and
opening (650), by the displacement of the third conductor, the current conduction path of the conductor;
**characterized in that** the third conductor further comprises a retainer (130) arranged, for each of the plurality of electrical finger contacts, to retain a portion of the electrical finger contact against the base member and to urge portions of the electrical finger contact located either side of the retained portion away from the base member and into electrical and physical contact with at least one of the first and second conductors, wherein the urged portions of the plurality of electrical finger contacts form the resilient member (112).

## Patentansprüche

1. Schalter (100) für ein Elektrofahrzeug (500), umfassend:
eine Zündkammer (104);
einen pyrotechnischen Aktuator (102), der angeordnet ist, um bei Zündung Gas in die Zündkammer freizusetzen;
einen ersten Leiter (106) und einen zweiten Leiter (108), der erste und der zweite Leiter umfassend Verbindungskontakte (106a, 108a); und
einen dritten Leiter (110), der bei Betätigung durch den pyrotechnischen Aktuator in eine Richtung von einer ersten Position zu einer zweiten Position bewegbar ist, der dritte Leiter umfassend:
ein Basiselement (128) und
eine Vielzahl von elektrischen Fingerkontakten (122), die um das Basiselement herum verteilt sind;
wobei in der ersten Position der dritte Leiter zwischen dem ersten und dem zweiten Leiter durch ein elastisches Element elastisch gelagert ist und in elektrischem Kontakt mit diesen ist, um einen Stromleitungsweg zu definieren, und
wobei in der zweiten Position der dritte Leiter von mindestens einem von dem ersten und dem zweiten Leiter elektrisch getrennt ist, um den Stromleitungsweg zu öffnen;
**dadurch gekennzeichnet, dass** der dritte Leiter ferner einen Halter (130) umfasst, der für jeden der Vielzahl von elektrischen Fingerkontakten angeordnet ist, um einen Abschnitt des elektrischen Fingerkontakts gegen das Basiselement zu halten und Abschnitte des elektrischen Fingerkontakts, die sich auf einer Seite des gehaltenen Abschnitts befinden, von dem Basiselement weg und in elektrischen und physischen Kontakt mit mindestens einem von dem ersten und dem zweiten Leiter zu drücken, wobei die gedrückten Abschnitte der Vielzahl von elektrischen Fingerkontakten das elastische Element (112) ausbilden.

2. Schalter nach Anspruch 1, wobei der dritte Leiter ferner in der ersten Position durch Aussparungen gelagert wird, die angeordnet sind, um einen Teil des elastischen Elements aufzunehmen.

3. Schalter nach Anspruch 1 oder 2, wobei das elastische Element angeordnet ist, um eine Kraft in eine Richtung auszuüben, die im Wesentlichen zu der Bewegungsrichtung des dritten Leiters senkrecht ist.

4. Schalter nach einem der vorstehenden Ansprüche, wobei das Basiselement einen Ring umfasst, und wobei die Vielzahl von elektrischen Fingerkontakten in einem ringförmigen Ring um das Basiselement herum angeordnet sind.

5. Schalter nach einem der vorstehenden Ansprüche, wobei der pyrotechnische Aktuator angeordnet ist, um Gas in die Zündkammer in eine Richtung freizusetzen, die im Wesentlichen zu der Bewegungsrichtung des dritten Leiters parallel ist, um den dritten Leiter zu betätigen.

6. Schalter nach einem der vorstehenden Ansprüche, ferner umfassend ein Gehäuse (114), das angeordnet ist, um die Zündkammer, den dritten Leiter und mindestens einen Abschnitt jedes des ersten und des zweiten Leiters zu umschließen.

7. Schalter nach einem der vorstehenden Ansprüche, wobei der pyrotechnische Aktuator austauschbar ist.

8. Schalter nach einem der vorstehenden Ansprüche, ferner umfassend einen Rücksetzmechanismus, der angeordnet ist, um den dritten Leiter nach Betätigung durch den pyrotechnischen Aktuator von der zweiten Position in die erste Position zu bewegen.

9. System, umfassend:
den Schalter nach einem der vorstehenden Ansprüche; und
eine Steuervorrichtung (570), die angeordnet ist, um dem pyrotechnischen Aktuator ein Signal bereitzustellen, den pyrotechnischen Aktuator zu zünden.

10. Fahrzeug (500), umfassend den Schalter nach einem der Ansprüche 1 bis 8 oder das System nach Anspruch 9, optional, wobei das Fahrzeug ein Elektrofahrzeug ist.

11. Verfahren zum Betreiben eines Schalters für ein Elektrofahrzeug, umfassend:
Zünden (610) eines pyrotechnischen Aktuators;
Freisetzen (620), durch die Zündung, von Gas in eine Zündkammer;
Ausüben (630), mit dem freigesetzten Gas, von Druck auf einen dritten, bewegbaren Leiter, der in einer ersten Position gehalten wird, der dritte Leiter umfassend:
ein Basiselement und
eine Vielzahl von elektrischen Fingerkontakten, die um das Basiselement herum verteilt sind;
wobei in der ersten Position der dritte Leiter zwischen dem ersten und dem zweiten Leiter durch ein elastisches Element elastisch gelagert ist und in elektrischem Kontakt mit diesen ist, um einen Stromleitungsweg zu definieren;
Bewegen (640), durch den ausgeübten Druck, des dritten Leiters von der ersten Position und einer zweiten Position, wobei in der zweiten Position der dritte Leiter von mindestens einem des ersten und des zweiten Leiters elektrisch getrennt ist; und
Öffnen (650), durch die Verschiebung des dritten Leiters, des Stromleitungswegs des Leiters;
**dadurch gekennzeichnet, dass** der dritte Leiter ferner einen Halter (130) umfasst, der für jeden der Vielzahl von elektrischen Fingerkontakten angeordnet ist, um einen Abschnitt des elektrischen Fingerkontakts gegen das Basiselement zu halten und Abschnitte des elektrischen Fingerkontakts, die sich auf einer Seite des gehaltenen Abschnitts befinden, von dem Basiselement weg und in elektrischen und physischen Kontakt mit mindestens einem von dem ersten und dem zweiten Leiter zu drücken, wobei die gedrückten Abschnitte der Vielzahl von elektrischen Fingerkontakten das elastische Element (112) ausbilden.

## Revendications

1. Commutateur (100) pour un véhicule électrique (500), comprenant :
une chambre d'allumage (104) ;
un actionneur pyrotechnique (102) agencé pour libérer du gaz dans la chambre d'allumage lors d'un allumage ;
un premier conducteur (106) et un deuxième conducteur (108), les premier et deuxième conducteurs comprenant des contacts de connexion (106a, 108a) ; et
un troisième conducteur (110) mobile dans une direction (130) allant d'une première position à une seconde position lors d'un actionnement par l'actionneur pyrotechnique ; le troisième conducteur comprenant :
un élément de base (128), et
une pluralité de contacts de doigt électrique (122) répartis autour de l'élément de base ;
dans lequel dans la première position, le troisième conducteur est supporté élastiquement entre, et en contact électrique avec, des premier et deuxième conducteurs par un élément élastique pour définir un trajet de conduction de courant ;
dans lequel, dans la seconde position, le troisième conducteur est électriquement séparé d'au moins un des premier et deuxième conducteurs de manière à ouvrir le trajet de conduction de courant ;
**caractérisé en ce que** le troisième conducteur comprend en outre un dispositif de retenue (130) agencé, pour chacun parmi la pluralité de contacts de doigt électrique, pour retenir une partie du contact de doigt électrique contre l'élément de base et pour presser des parties du contact de doigt électrique situé de part et d'autre de la partie retenue à l'écart de l'élément de base et en contact électrique et physique avec au moins un des premier et deuxième conducteurs, dans lequel les parties sollicitées de la pluralité de contacts de doigt électrique forment l'élément élastique (112).

2. Commutateur selon la revendication 1, dans lequel le troisième conducteur est en outre supporté dans la première position par des évidements agencés pour recevoir une partie de l'élément élastique.

3. Commutateur selon la revendication 1 ou la revendication 2, dans lequel l'élément élastique est agencé pour exercer une force dans une direction sensiblement perpendiculaire à la direction de mouvement du troisième conducteur.

4. Commutateur selon l'une quelconque des revendications précédentes, dans lequel l'élément de base comprend un anneau, et dans lequel la pluralité de contacts de doigt électrique sont agencés dans une bague annulaire autour de l'élément de base.

5. Commutateur selon l'une quelconque des revendications précédentes, dans lequel l'élément pyrotechnique est agencé pour libérer du gaz dans une chambre d'allumage dans une direction sensiblement parallèle à la direction de mouvement du troisième conducteur pour retenir le troisième conducteur.

6. Commutateur selon l'une quelconque des revendications précédentes, comprenant en outre un logement (114) agencé pour entourer la chambre d'allumage, le troisième conducteur, et au moins une partie de chacun des premier et deuxième conducteurs.

7. Commutateur selon l'une quelconque des revendications précédentes, dans lequel l'actionneur pyrotechnique est remplaçable.

8. Commutateur selon l'une quelconque des revendications précédentes, comprenant en outre un mécanisme de réinitialisation agencé pour déplacer le troisième conducteur de la seconde position à la première position après actionnement par l'actionneur pyrotechnique.

9. Système comprenant :
le commutateur selon l'une quelconque des revendications précédentes ; et
un dispositif de commande (570) agencé pour fournir un signal à l'actionneur pyrotechnique pour allumer l'actionneur pyrotechnique.

10. Véhicule (500) comprenant le commutateur selon l'une quelconque des revendications 1 à 8 ou le système selon la revendication 9, facultativement, dans lequel le véhicule est un véhicule électrique.

11. Procédé de fonctionnement d'un commutateur pour un véhicule électrique, comprenant :
l'allumage (610) d'un actionneur pyrotechnique ;
la libération (620), par allumage, du gaz dans une chambre d'allumage ;
le fait d'exercer (630), avec le gaz libéré, une pression sur un troisième conducteur, mobile, retenu dans une première position, le troisième conducteur comprenant :
un élément de base, et
une pluralité de contacts de doigt électrique répartis autour de l'élément de base ;
dans lequel dans la première position, le troisième conducteur est agencé entre, et en contact électrique et physique avec, des premier et deuxième conducteurs pour définir un trajet de conduction de courant ;
le déplacement (640), par la pression exercée, du troisième conducteur depuis la première position et une seconde position, dans lequel dans la seconde position le troisième conducteur est électriquement séparé d'au moins un des premier et deuxième conducteurs ; et
l'ouverture (650), par le déplacement du troisième conducteur, du chemin de conduction courant du conducteur ;
**caractérisé en ce que** le troisième conducteur comprend en outre un dispositif de retenue (130) agencé, pour chacun parmi la pluralité de contacts de doigt électrique, pour retenir une partie du contact de doigt électrique contre l'élément de base et pour solliciter des parties du contact de doigt électrique situé de part et d'autre de la partie retenue à l'écart de l'élément de base et en contact électrique et physique avec au moins un des premier et deuxième conducteurs, dans lequel les parties sollicitées de la pluralité de contacts de doigt électrique forment l'élément élastique (112).
